# FASCICULE DE BREVET EUROPEEN

(11) **EP 1 102 213 B1**
(45) Date de publication et mention de la délivrance du brevet: **15.08.2007**
(21) Numéro de dépôt: 00420233.9
(22) Date de dépôt: 13.11.2000
(51) Int. Cl.: G07B 13/02, G07C 7/00, G06M 1/274, G01P 3/487, G01P 21/02

(54) **Procédé pour sécuriser le fonctionnement du capteur électronique associé à un taximètre**
Verfahren zur Funktionssicherung eines elektronischen Sensors eines Taxameters
Method for guaranteeing the correct operation of a taximeter's electronic sensor

(30) Priorité: 22.11.1999 FR 9914699
(43) Date de publication de la demande: 23.05.2001
(73) Titulaire: AUTOMATISMES ET TECHNIQUES AVANCEES - A.T.A., 13710 Fuveau (FR)
(72) Inventeur: Ricard, Claude, Glencoe, IL 60022 (US)
(74) Mandataire: Denjean, Eric

(56) Documents cités:
- EP-A- 0 928 970
- DE-A- 3 832 541
- DE-A- 4 221 891
- FR-A- 2 726 108

## Description

La présente invention se rapporte à un procédé pour sécuriser le fonctionnement du capteur électronique associé à un taximètre.

Un taximètre est, de manière très générale, un appareil qui a pour objet d'indiquer le prix à payer pour une course effectuée par un taxi, ce prix dépendant de plusieurs paramètres, dont entre autres la distance parcourue par le taxi, c'est-à-dire finalement le nombre de tours de roue effectué par ce véhicule pendant la course.

Pour la mesure de ce nombre de tours de roue, on utilise un capteur, dit « électronique », qui se compose de plusieurs sondes (« sensors » en anglais) qui sont maintenant généralement fixées sur l'arbre de cardan d'une des roues du véhicule, et d'un corps de détection qui est fixé sur le châssis du véhicule et qui incorpore un circuit électronique à microprocesseur.

Ce capteur délivre, sur une ligne de sortie séparée qui est reliée au taximètre, des impulsions qui sont représentatives du nombre de tours de roue.

Dans la grande majorité des cas, il s'agit d'un capteur à effet Hall, et il est en conséquence prévu plusieurs sondes qui sont constituées par des aimants régulièrement répartis autour de l'arbre de cardan auquel ils sont fixés.

Sur les dispositifs connus actuellement, le microprocesseur du corps de détection est programmé pour vérifier que le nombre d'aimants est bien celui normalement prévu, et donc qu'un fraudeur n'a pas ensuite ajouté un ou plusieurs aimants afin que le taximètre calcule un prix qui est supérieur au prix réel. Il est en effet aisé de rajouter une ou plusieurs sondes à un tel capteur, et par suite de lui faire compter, pour chaque tour de roue, un plus grand nombre d'impulsions que le nombre d'impulsions qu'il devrait compter normalement.

Typiquement, un capteur de l'Art actuel comporte, régulièrement répartis autour de l'arbre de cardan, quatre aimants, dont trois aimants ayant un pôle d'un premier signe, par exemple un pôle Nord fournissant des impulsions négatives en sortie du détecteur à effet Hall, et trois pôles de l'autre signe, c'est-à-dire trois pôles Sud fournissant chacun des impulsions positives.

Le microprocesseur du corps fixe de détection est alors programmé pour vérifier qu'à chaque tour de roue, on relève bien une impulsion négative suivie de trois impulsions positives.

Dans le cas contraire, le microprocesseur considère qu'il y a eu fraude, et il bloque alors définitivement le fonctionnement du capteur. ,

Toutefois, cette façon de faire ne permet pas de détecter que le fraudeur a ajouté, autour de l'arbre de cardan, autant de pôles qu'il y en a à l'origine, c'est-à-dire ici un pôle du premier signe et trois pôles du deuxième signe. Dans un tel cas, le microprocesseur du corps de détection ne relèvera aucune fraude, et il fournira un nombre d'impulsions double de celui qu'il devrait réellement fournir pour chaque tour de roue. Ceci est un premier inconvénient de ces dispositifs connus.

Le document EP 0 928 970 décrit un dispositif appartenant comme l'invention à la famille des capteurs utilisés pour permettre le calcul d'une course au niveau d'un taximètre. Plus précisément, l'objectif du système décrit dans ce document est de permettre la détection d'ajout de sondes supplémentaires qui viendrait fausser la mesure, de vitesse, par l'ajout d'impulsions frauduleuses. Pour ce faire, la durée moyenne entre deux impulsions peut être calculée, et comparée avec une durée de référence enregistrée lors d'un étalonnage. Par la suite, si lorsque le véhicule est à vitesse correspondant à celle de l'étalonnage, si la durée moyenne entre impulsion ne correspond pas à la valeur préenregistrée, il y a suspicion de fraude.

Un autre inconvénient est le risque de faux comptages, volontaires (frauduleux) ou non, qui seraient dû à des déplacements, frauduleux ou non, des aimants autour de l'arbre de cardan.

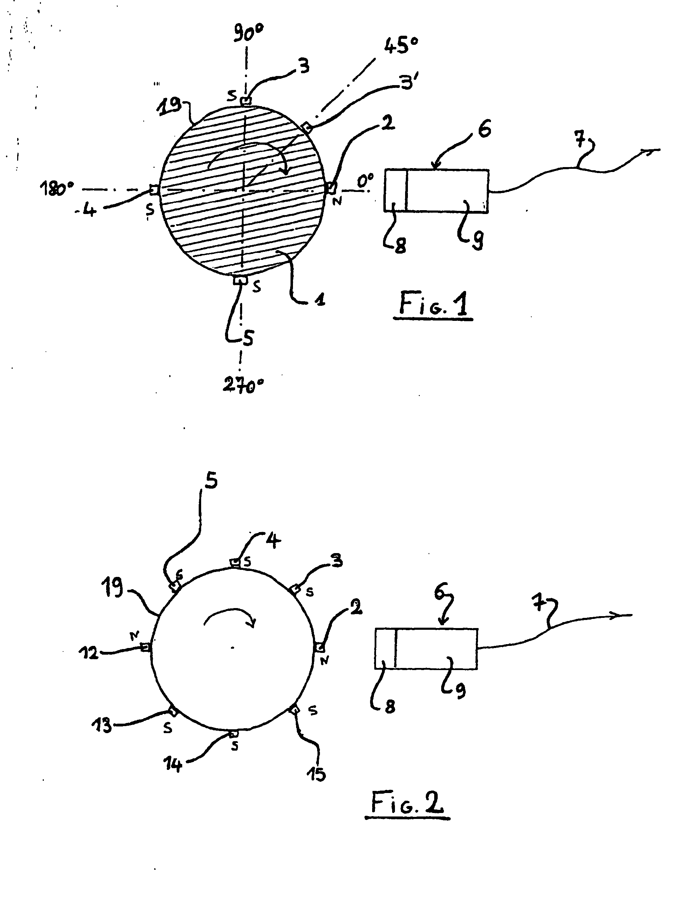

Pour expliquer ce risque, il est fait référence à la figure 1 jointe qui représente, en coupe transversale, l'arbre de cardan 1 garni des quatre aimants 2, 3, 4, 5 associé au corps fixe de détection 6 du capteur, ce corps 6 étant équipé d'un fil de sortie 7 vers le taximètre (non représenté).

Au montage initial du capteur 2-7, les quatre sondes ou aimants 2, 3, 4, 5 sont régulièrement répartis, comme représenté, autour de l'arbre de cardan 1, et sont généralement montés sur cet arbre au moyen d'un simple collier de serrage (non représenté).

Ces aimants sont donc ici normalement décalés, comme représenté, de 90 degrés l'un par rapport à l'autre. Sur le cercle trigonométrique, l'aimant 2 est à 0 degré en position angulaire, l'aimant 3 à 90 degrés, l'aimant 4 à 180 degrés, et l'aimant 5 à 270 degrés.

Cependant, il peut arriver au cours du temps, par des phénomènes d'usure ou de glissement, que les aimants 2 à 5 viennent à se déplacer intempesti-vement en position angulaire autour de l'arbre 1. Il peut aussi arriver que ce déplacement angulaire des aimants soit intentionnel et donc effectué par le chauffeur de taxi dans un but frauduleux

Nous allons expliquer pourquoi ce déplacement angulaire des aimants provoque un faux comptage, en supposant que l'aimant 3, par exemple, ait été déplacé de 45 degrés vers l'aimant 2, pour occuper alors la position 3' où il est, comme représenté, à la position 45 degrés sur le cercle trigonométrique.

Il convient tout d'abord de rappeler que, pour un taxi équipé d'un taximètre, il existe une vitesse, dite « vitesse de conjonction », pour laquelle le prix calculé en fonction de la distance parcourue est égal au prix calculé en fonction du temps passé. Le taximètre est alors programmé pour calculer et afficher le prix correspondant au temps passé si le taxi roule à une vitesse inférieure à la vitesse de conjonction ou est arrêté, et à contrario calculer et afficher le prix correspondant à la distance parcourue si le taxi roule à une vitesse supérieure à la vitesse de conjonction.

Supposons que le taxi roule au voisinage de cette vitesse de conjonction, ce qui est fréquent en ville en raison des encombrements.

L'arbre 1 est supposé tourner dans le sens horaire comme représenté par la flèche sur le dessin.

Au cours de chaque rotation complète de cet arbre 1, l'aimant 2 passe devant le corps de détection 6, suivi de l'aimant 3' au bout de 45 degrés de rotation, lui-même suivi de l'aimant 4 au bout de 135 degrés (3 fois 45 degrés) de rotation supplémentaire.

En fin de compte, le temps pour passer de l'aimant 2 à l'aimant 3' aura été deux fois inférieur à celui qu'il aurait fallu pour passer de l'aimant 2 à l'aimant 3, et le taximètre va voir, entre la position 2 et la position 3', une vitesse deux fois supérieure à la vitesse réelle. Il va croire que la vitesse est alors supérieure à la vitesse de conjonction, et calculer et afficher en conséquence un prix correspondant à une distance parcourue qui est de l'ordre du double de celle parcourue réellement.

De même façon, entre les passages successifs de l'aimant 3' et de l'aimant 4, il va voir une vitesse nettement inférieure à la vitesse de conjonction et va faussement voir et afficher un prix correspondant à un temps passé, ce temps étant alors vu et affiché comme supérieur au temps réellement écoulé puisqu'il ne s'agit pas du temps écoulé pour passer de la position de l'aimant 3 à celle de l'aimant 4, mais bien de celui pour passer de la position de l'aimant 3' à celle de l'aimant 4.

Globalement, le prix finalement affiché par le taximètre sera alors supérieur au prix réel.

L'invention vise à remédier à ces inconvénients.

Elle se rapporte à cet effet à un procédé pour sécuriser le fonctionnement d'un capteur électronique associé à un taximètre, ce capteur au moins comportant une ou plusieurs sondes, telles que des aimants, fixées autour d'un arbre rotatif du véhicule, et au moins un corps de détection, tel qu'un détecteur à effet Hall, qui est fixé sur le châssis du véhicule en relation avec cette ou ces sondes, caractérisé en ce qu'il consiste à ne prendre en compte, et donc à transmettre vers ledit taximètre, pour chaque tour de cet arbre rotatif, que les informations émanant d'une seule sonde, à vérifier qu'il n'y a pas eu adjonction, par rapport à la configuration initiale desdites sondes, d'une ou plusieurs sondes supplémentaires, et à déclencher une action anti-fraude en cas d'adjonction d'une ou plusieurs sondes supplémentaires.

Avantageusement, on procède à cette vérification en analysant la suite des temps successifs qui s'écoulent entre deux impulsions successives, et l'on déclenche une action anti-fraude si l'on constate que ces temps successifs forment une suite oscillante, c'est-à-dire une suite de valeurs dont chacune alternativement diminue d'une valeur à la suivante, puis réaugmente de cette dernière valeur à celle qui suit immédiatement, et ainsi de suite.

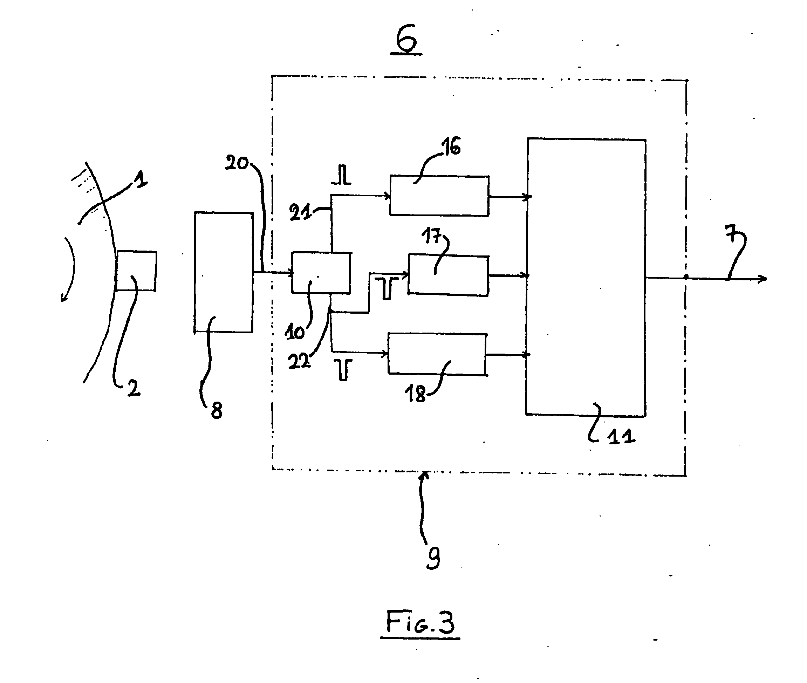

L'invention sera bien comprise, et ses avantages et autres caractéristiques ressortiront mieux, en référence au dessin schématique associé dans lequel :
■ Figure 1, déjà partiellement décrite ci-dessus, montre un capteur électronique pour taximètre, ce capteur étant équipé de quatre aimants associés à un détecteur à effet Hall, cette figure illustrant en outre une première forme de fraude ou faux-comptage,
■ Figure 2 est une vue semblable à la figure 1, et illustrant une deuxième forme de fraude,
■ Figure 3 est un schéma synoptique explicatif de l'invention.

La figure 1 déjà décrite ci-dessus, montre l'implantation classique d'un capteur pour taximètre, en précisant comment, par déplacement d'un aimant 3 vers une autre position angulaire 3', il est possible, dans un but frauduleux ou non, d'introduire un mauvais comptage.

Il est en outre précisé ici que le corps de détection 6 se compose d'un détecteur à effet Hall 8 et d'un microprocesseur 9.

Ce microprocesseur 9 réalise non seulement le comptage et la mise en forme des impulsions expédiées vers le taximètre par la ligne de sortie 7, mais il analyse en outre les signes des impulsions successives. Comme la configuration adoptée ici utilise un aimant 2 dont le pôle Nord N est orienté vers l'extérieur, et trois aimants 3, 4, 5 dont c'est à contrario le pôle Sud S qui est orienté vers l'extérieur, le microprocesseur 9 doit nécessairement recevoir une série d'impulsions constituée d'impulsions négatives séparées l'une de l'autre par trois impulsions positives. Si tel n'est pas le cas, il se bloque immédiatement, et le capteur 6 ne peut alors plus fonctionner, de même bien évidemment que le taximètre. Il n'est donc à priori pas possible d'ajouter frauduleusement un cinquième aimant pour frauder sur le prix à payer.

Cependant, comme montré précédemment, les aimants peuvent être déplacés sur la circonférence 19 de l'arbre 1, ce qui permet de frauder et, quoi qu'il en soit, ce qui engendre un mauvais comptage. Nous allons maintenant montrer comment l'invention remédie à cet inconvénient, en se référant pour ceci à la figure 3 qui permet de comprendre comment on va modifier le logiciel du microprocesseur 9 pour réaliser le procédé de l'invention.

Pour clarifier les idées, cette modification de logiciel est présentée ici sous la forme d'un schéma-blocs.

Les impulsions de détection en sortie 20 du détecteur à effet Hall 8 sont appliquées à un circuit d'analyse 10 qui sépare la série d'impulsions en impulsions négatives, qui sont celles émises par le détecteur 8 lorsque l'unique pôle Nord 2 passe devant lui, et en impulsions positives, qui sont celles émises par le détecteur lorsque les trois pôles Sud 3, 4, 5 passent devant lui.

Selon l'invention, les impulsions positives, qui sortent sur la liaison 21, ne sont pas prises en compte par le microprocesseur 9 en tant qu'impulsions représentatives de la distance parcourue, et elles ne sont donc pas fournies, par l'organe de calcul 11, sur la ligne de sortie 7 qui alimente le taximètre en impulsions de calcul de la distance parcourue.

Elles sont cependant comptées dans un compteur 16 et expédiées ensuite par ce dernier, pour analyse, vers l'organe de calcul 11.

En revanche, les impulsions négatives sur l'autre sortie 22 sont, selon l'invention, les seules qui sont prises en compte par le microprocesseur 9 comme impulsions représentatives de la distance parcourue par le taxi.

Avant d'être appliquées à l'organe de calcul 11, elles sont comptées dans un circuit de comptage 18, et leur période, c'est-à-dire les temps séparant deux impulsions négatives successives, est analysée dans un analyseur de fréquences 17.

En permanence, l'organe de calcul 11 étudie les données qui lui sont transmises par les compteurs 16 et 18. Classiquement, il se bloque dès qu'il constate que chaque impulsion négative en sortie du compteur 18 n'est pas suivie de trois impulsions positives en sortie du compteur 16.

En outre, comme il ne prend en compte que les impulsions négatives, provenant du seul aimant 2 à pôle Nord, le comptage de la distance parcourue est indépendant d'une part de la position de cet aimant 2 sur la circonférence 19, et d'autre part de la position des trois autres aimants 3, 4, 5 sur cette circonférence. La fraude, ou mauvais comptage, due à un déplacement d'un ou de plusieurs aimants n'est alors plus possible.

La figure 2 illustre une autre possibilité de fraude, déjà évoquée précédemment, due à l'ajout d'un aimant à pôle Nord 12, ainsi qu'entre les deux aimants Nord 12 et 2 d'un nombre d'aimants à pôle Sud 13, 14, 15 égal à celui des aimants de ce type 3, 4, 5 déjà en place sur la circonférence.

L'invention empêche aussi, par le biais de l'analyseur 17 des temps successifs entre impulsions négatives (pôles Nord 2 et 12), ce genre de fraude.

Pour ceci, l'organe de calcul 11 analyse finement les intervalles successifs entre impulsions négatives qui lui sont communiquées par le circuit 17. Si cette suite d'intervalles est une suite oscillante, c'est-à-dire si alternativement chaque intervalle augmente d'un intervalle au suivant, puis diminue de ce dernier à celui qui suit, et ainsi de suite, c'est qu'un aimant de type Nord, ici l'aimant 12, a été frauduleusement rajouté (avec bien entendu les trois aimants de type Sud supplémentaires 13, 14, 15), et par conséquent l'organe de calcul 11 bloque immédiatement le fonctionnement du capteur 6.

Ceci se produit d'une part si l'aimant 12 est rajouté en un point quelconque de la circonférence, car alors les intervalles de passage entre les deux aimants 2, 12 ne sont pas égaux. En outre, ceci se produit aussi dans le cas où le fraudeur essaie de placer, comme représenté en Figure 2, son aimant 12 exactement à l'opposé de l'aimant 2 sur la circonférence 19, pour l'excellente raison qu'un tel positionnement rigoureusement diamétral lui est pratiquement impossible à réaliser.

En effet, d'une part l'accès à l'arbre de cardan est plutôt malaisé, et d'autre part le câble 7 qui relie le capteur 6 au taximètre est un câble mécaniquement blindé et donc impossible à débrancher. Pour ajuster avec une précision suffisante la position de son aimant additionnel 12, il faudrait donc faire l'essai sur le dispositif capteur-taximètre lui-même, ce qui est impossible si le capteur 12 n'a pas tout de suite été mis au bon endroit (ce qui n'est pas faisable), puisque alors le capteur se bloque immédiatement par le fait qu'il constate qu'il fournit une suite d'impulsions d'intervalles oscillants.

Il est à noter qu'une telle suite oscillante n'existe pas mécaniquement. Ou bien le taxi roule à vitesse constante, et alors les intervalles entre impulsions successives ont une valeur constante, ou bien il accélère, et alors ces intervalles augmentent progressivement sans oscillation d'un intervalle au suivant, ou bien il décélère, et alors ces intervalles diminuent progressivement sans oscillation.

Pour tenir compte d'éventuels phénomènes mécaniques, il est intéressant de programmer le microprocesseur 9 du capteur 6 pour qu'il examine une série de N temps successifs (par exemple : N=32), et qu'il comptabilise le nombre de fois que la configuration temporelle :
temps « long » - temps « court » - temps « long »
apparaît, c'est-à-dire le nombre M de fois que la vitesse apparente oscille en valeur, ou autrement dit que le signe de l'accélération apparente change. Si, au cours de ces N temps successifs, il est détecté un nombre M égal à une certaine valeur, proche de N (par exemple : M=28), le microprocesseur 9 déclenche alors l'action anti-fraude.

Encore une fois, il est fait remarquer que le schéma synoptique de la figure 3, quoique tout à fait réalisable, n'a été donné que pour faciliter la compréhension du procédé de l'invention. En réalité, les différentes fonctions auxquelles il correspond sont intégrées dans le nouveau logiciel du microprocesseur 9 du schéma de la figure 1.

Comme il va de soi, l'invention n'est pas limitée à l'exemple de réalisation qui vient d'être décrit.

C'est ainsi, par exemple et avantageusement, que l'on pourrait concevoir un capteur ne comportant qu'un seul et unique aimant 2. Dans un tel cas, la vérification anti-fraude serait uniquement celle de vérification du caractère non-oscillant des intervalles entre impulsions de mesure successives.

C'est ainsi également que le microprocesseur 9 du capteur 6 peut être programmé pour, en cas de détection de l'adjonction d'une ou plusieurs sondes supplémentaires, émettre un nombre donné d'impulsions. Dans un tel cas, le taximètre associé à ce capteur 6 est avantageusement programmé pour comptabiliser ce nombre donné d'impulsions, qui lui sont transmises par le capteur, et pour figurer en conséquence un code d'erreur ou d'information.

## Revendications

1. Procédé pour sécuriser le fonctionnement d'un capteur électronique (6) associé à un taximètre, ce capteur au moins comportant une ou plusieurs sondes (2, 3, 4, 5), telles que des aimants, fixées autour d'un arbre rotatif (1) du véhicule, et au moins un corps de détection (8), tel qu'un détecteur à effet Hall, qui est fixé sur le châssis du véhicule en relation avec cette ou ces sondes, consistant à ne prendre en compte, et donc à transmettre vers ledit taximètre, pour chaque tour de cet arbre rotatif (1), que les impulsions émanant d'une seule sonde (2), à vérifier qu'il n'y a pas eu adjonction, par rapport à la configuration initiale desdites sondes (2, 3, 4, 5), d'une ou plusieurs sondes supplémentaires, et à déclencher une action anti-fraude en cas d'adjonction d'au moins une sonde supplémentaire, **caractérisé en ce que** l'on procède à cette vérification en analysant la suite des temps successifs qui s'écoulent entre deux impulsions successives, et l'on déclenche une action anti-fraude si l'on constate que ces temps successifs forment une suite oscillante qui correspond donc à des changements de signe successifs de l'accélération apparente.

2. Procédé selon la revendication 1, **caractérisé en ce que** l'on déclenche cette action anti-fraude si une série de N temps successifs, N étant un nombre entier déterminé, comporte au moins M changements de signe de ladite accélération apparente, M étant un nombre entier déterminé et inférieur à N.

3. Dispositif composé d'un capteur électronique (6) associé à un taximètre, ce capteur (6) comportant une ou plusieurs sondes (2, 3, 4, 5), telles que des aimants, fixées autour d'un arbre rotatif (1) du véhicule, au moins un corps de détection (8), tel qu'un détecteur à effet Hall, qui est fixé sur le châssis du véhicule en relation avec cette ou ces sondes, et un microprocesseur (9),
**caractérisé en ce que** le programme de ce microprocesseur (9) réalise le procédé selon l'une quelconque des revendications 1 à 2.

4. Dispositif selon la revendication 3, **caractérisé en ce que** ledit capteur (6) ne comporte qu'une seule sonde (2).

5. Dispositif selon l'une des revendications 3 ou 4, **caractérisé en ce que** le microprocesseur (9) du capteur (6) est programmé pour, en cas de détection de l'adjonction d'une ou plusieurs sondes supplémentaires, émettre un nombre donné d'impulsions.

6. Dispositif selon la revendication 5, **caractérisé en ce que** le taximètre associé à ce capteur (6) est programmé pour comptabiliser ce nombre donné d'impulsions, qui lui sont transmises (7) par le capteur (6), et pour figurer en conséquence un code d'erreur ou d'information.

## Claims

1. Process for protecting the functioning of an electronic sensor (6) associated with a taximeter, this sensor at least comprising one or more sensor elements (2, 3, 4, 5), such as magnets, fixed around a rotating shaft (1) of the vehicle, and at least one detection body (8), such as a detector with Hall effect, which is fixed on the chassis of the vehicle in relation with this or these sensor elements,
wherein the process comprises the following steps of:
- taking into account, and therefore in transmitting towards said taximeter, for every revolution of this rotating shaft, only the pulses coming from one sensor element,
- verifying that there has been no addition, with respect to the initial configuration of said sensor elements (2, 3, 4, 5), of one or more additional sensor elements,
- and in triggering off an anti-fraud action in the case of one or more additional sensor elements having been added,
**characterized in that** said verification is effected by analysing the sequence of the successive times which elapse between two successive pulses, and an anti fraud action is triggered off if it is ascertained that these successive times form an oscillating sequence which corresponds therefore to successive charges in sign of the apparent acceleration.

2. The process of Claim 1, **characterized in that** this anti-fraud action is triggered off if a series of N successive times, N being a determined whole number, comprises at least M changes of sign of said apparent acceleration, M being a determined whole number less than N.

3. Device composed of an electronic sensor (6) associated with a taximeter, this sensor comprising one or more sensor elements (6) such as magnets (2, 3, 4, 5), fixed around a rotating shaft of the vehicle (1); at least one detection (8) body such as a detector with Hall effect, which is fixed on the chassis of the vehicle in relation with this or these sensors; and a microprocessor, **characterized in that** the programme of this microprocessor carries out the process of any of Claim 1 or Claim 2.

4. The device of Claim 3, **characterized in that** said sensor (6) comprises only one sensor element (2).

5. The device of Claim 3 or 4, **characterized in that** the microprocessor (9) of the sensor (6) is programmed to emit a given number of pulses, in the event of detection of the addition of one or more additional sensor elements.

6. The device of Claim 5, **characterized in that** the taximeter associated with this sensor (6) is programmed to count this given number of pulses, which are transmitted (7) thereto by the sensor (6), and consequently to represent an error or information code.

## Patentansprüche

1. Verfahren zum Sichern des Funktionsablaufs eines einem Taxameter zugeordneten elektronischen Messwertaufnehmers (6), wobei dieser Messwertaufnehmer mindestens einen Messkopf oder mehrere Messköpfe (2, 3, 4, 5) wie etwa Magnete, die um eine Drehwelle (1) des Fahrzeugs befestigt sind, und mindestens einen Erfassungskörper (8) wie etwa einen Hall-Effekt-Messfühler umfasst, der am Fahrgestell des Fahrzeugs in Verbindung mit diesem Messkopf oder diesen Messköpfen befestigt ist, wobei das Verfahren darin besteht, nur die Impulse bei jeder Umdrehung dieser Drehwelle (1) zu berücksichtigen und somit an das Taxameter zu übertragen, die von einem einzelnen Messkopf (2) ausgehen, zu überprüfen, dass es in Bezug auf die anfängliche Auslegung der Messköpfe (2, 3, 4, 5) keine Hinzufügung eines zusätzlichen Messkopfs oder mehrerer zusätzlicher Messköpfe gegeben hat, und im Falle der Hinzufügung eines zusätzlichen Messkopfs oder mehrerer zusätzlicher Messköpfe eine Betrugsabwehrmaßnahme auszulösen, **dadurch gekennzeichnet, dass** diese Überprüfung **dadurch** vorgenommen wird, dass der Ablauf aufeinanderfolgender Zeiten, die zwischen zwei aufeinanderfolgenden Impulsen verstreichen, analysiert und eine Betrugsabwehrmaßnahme ausgelöst wird, wenn festgestellt wird, dass die aufeinanderfolgenden Zeiten einen schwankenden Ablauf bilden, der somit aufeinanderfolgenden Vorzeichenveränderungen der Scheinbeschleunigung entspricht

2. Verfahren nach Anspruch 1, **dadurch gekennzeichnet, dass** diese Betrugsabwehrmaßnahme ausgelöst wird, wenn eine Reihe von N aufeinanderfolgenden Malen, wobei N eine bestimmte ganze Zahl ist, mindestens M Vorzeichenveränderungen der Scheinbeschleunigung umfassen, wobei M eine bestimmte ganze Zahl und kleiner als N ist.

3. Vorrichtung, die sich aus einem, einem Taxameter zugeordneten elektronischen Messwertaufnehmer (6) zusammensetzt, wobei dieser Messwertaufnehmer (6) einen Messkopf oder mehrere Messköpfe (2, 3, 4, 5) wie etwa Magneten, die um eine Drehwelle (1) des Fahrzeugs befestigt sind, und mindestens einen Erfassungskörper (8) wie etwa einen Hall-Effekt-Messfühler, der am Fahrgestell des Fahrzeugs in Verbindung mit diesem Messkopf oder diesen Messköpfen befestigt ist, und einen Mikroprozessor (9) umfasst,
**dadurch gekennzeichnet, dass** das Programm dieses Mikroprozessors (9) das Verfahren nach einem der Ansprüche 1 bis 2 ausführt.

4. Vorrichtung nach Anspruch 3, **dadurch gekennzeichnet, dass** der Messwertaufnehmer (6) nur einen einzigen Messfühler (2) umfasst.

5. Vorrichtung nach einem der Ansprüche 3 oder 4, **dadurch gekennzeichnet, dass** der Mikroprozessor (9) des Messwertaufnehmers (6) dazu programmiert ist, im Falle einer Feststellung der Hinzufügung eines zusätzlichen Messfühlers oder mehrerer zusätzlicher Messfühler, eine bestimmte Anzahl von Impulsen abzugeben

6. Vorrichtung nach Anspruch 5, **dadurch gekennzeichnet, dass** das mit diesem Messwertaufnehmer (6) verbundene Taxameter dazu programmiert ist, diese bestimmte Anzahl an Impulsen, die ihm vom Messwertaufnehmer (6) übertragen (7) werden, abzurechnen und in der Folge einen Fehler- oder Informationscode anzuzeigen.
